# EUROPÄISCHE PATENTSCHRIFT

(11) **EP 0 564 906 B1**
(45) Veröffentlichungstag und Bekanntmachung des Hinweises auf die Patenterteilung: **04.10.1995**
(21) Anmeldenummer: 93104845.8
(22) Anmeldetag: 24.03.1993
(51) Int. Cl.: G01N 35/02

(54) **Bearbeitungsstation einer Analysenvorrichtung**
Processing station for an analyser
Station de traitement pour une analyseur

(30) Priorität: 06.04.1992 EP 92105901
(43) Veröffentlichungstag der Anmeldung: 13.10.1993
(73) Patentinhaber: F. HOFFMANN-LA ROCHE AG, 4002 Basel (CH)
(72) Erfinder: Rosenberg, Burkard, CH-6048 Horw (CH)
(74) Vertreter: Buntz, Gerhard

(56) Entgegenhaltungen:
- EP-A- 0 099 103
- US-A- 3 115 966
- US-A- 3 322 958
- US-A- 3 432 049

## Beschreibung

Die Erfindung betrifft eine Bearbeitungsstation zur Behandlung von Probenküvetten in einer Analysenvorrichtung mit einer Entnahmevorrichtung zur Entfernung einzelner Küvetten von einer Transporteinrichtung, zur Verbringung der Küvetten in eine Bearbeitungsposition in der Station und zum Zurücksetzen der Küvetten nach einer Behandlung auf die Transporteinrichtung.

Automatische Analysenvorrichtungen arbeiten in der Regel nach dem Prinzip, dass die Analysenproben oder Teilmengen davon in Küvetten verbracht, anschliessend einer Reihe von Bearbeitungsschritten wie Zufügen (Pipettieren) von Reagenzien, Mischen, Inkubieren etc. unterworfen und dass entweder mehrmals während der Bearbeitung und/oder einmal am Ende der Bearbeitung Messungen der erfolgten Reaktionen vorgenommen werden. Dabei erfolgt der Ablauf üblicherweise entweder so, dass die Küvetten mit den Analysenproben in fester Reihenfolge auf einem Transportmittel angeordnet werden und verschiedene Bearbeitungsstationen durchlaufen oder dass bei der sog. Batch-Bearbeitung, wie sie bei den sog. Zentrifugalanalysengeräten üblich ist, alle auf einem Träger (Rotor) angeordneten Küvetten quasi gleichzeitig den Bearbeitungsschritten und den Messungen unterworfen werden. Nach diesen Prinzipien arbeitende Analysensysteme leisten gute Dienste in grossen Kliniken und Analysenzentren, in denen grosse Probenzahlen verarbeitet werden müssen.

Eine Analysenvorrichtung mit einer Entnahmevorrichtung zur Entfernung einzelner Probenbehälter von einem Transportrotor und zur Verbringung der Probenbehälter in einer Messkammer ist aus US-A-3 432 049 bekannt.

Es hat sich aber angesichts der heutigen Vielfalt der möglichen Analysen und der medizinischen Anforderungen, vor allem im Bereich der klinischen Chemie herausgestellt, dass die bisher üblichen für den Durchsatz grosser Probenmengen geeigneten Analysenautomaten zu wenig flexibel sind, um auf einzelne Patienten bzw. Krankheitsbilder spezifisch zugeschnittene Analysenprofile (Full Random Access) zu erstellen und trotzdem eine grosse Zahl von Patientenproben zu bewältigen.

Der Erfindung liegt daher allgemein die Aufgabe zugrunde, ein Analysensystem bereitzustellen, das diesen Anforderungen Rechnung trägt, indem eine grosse Zahl von Analysenproben mit grösster Flexibilität bezüglich des an der einzelnen Probe durchgeführten Analysenprofils verarbeitet werden können. Im Speziellen besteht die Aufgabe im Bereitstellen einer Bearbeitungsstation für ein solches Analysensystem.

Erfindungsgemäss wird dies dadurch erreicht, dass eine Pipettiereinrichtung zur Pipettierung von Proben und/oder Reagenzien in eine in der Bearbeitungsposition befindlichen Küvette und eine Mischeinrichtung zur gleichzeitigen Bewegung der Küvetten während der Pipettierung gemäss einer Mischkurve zur Durchmischung des pipettierten Küvetteninhalts vorhanden sind.

Vorzugsweise enthalten die Entnahmevorrichtung eine Umsetz- und Positioniereinrichtung sowie eine Steuereinrichtung zum gleichzeitigen Steuern der Bewegungen der Umsetz- und Positioniereinrichtung als auch eines Mischvorganges während der Bearbeitung.

Die erfindungsgemässe Bearbeitungsstation kommt zum Einsatz in ener Analysenvorrichtung, die in EP-A-564 907 mit der Bezeichnung "Analysenvorrichtung" näher beschrieben ist. Auf diese Beschreibung wird hier Bezug genommen.

Im folgenden wird anhand der beiliegenden Zeichnungen ein Ausführungsbeispiel der Erfindung beschrieben.

Es zeigen:
- Fig. 1: eine axonometrische Darstellung der Vorrichtung vor der Entnahme einer Messküvette von einem Rotormagazin.
- Fig. 2: eine Darstellung entsprechend der Fig. 1 in Pipettierungsstellung der Küvette und Mischung des Küvetteninhaltes.
- Fig. 3: eine schematische Aufsicht auf die Steuerkurvenanordnung.

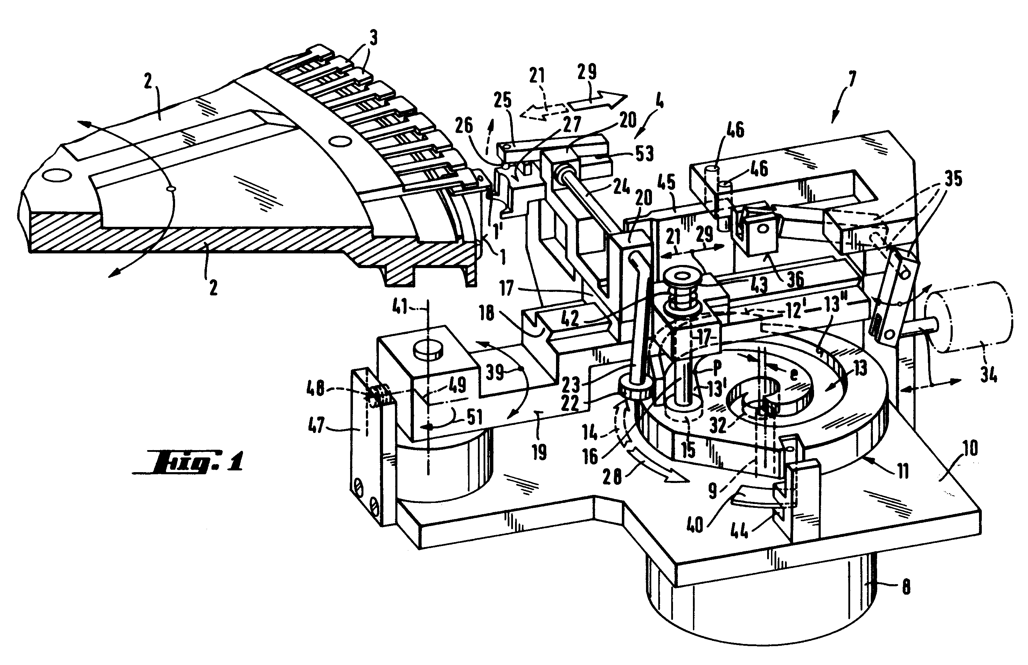

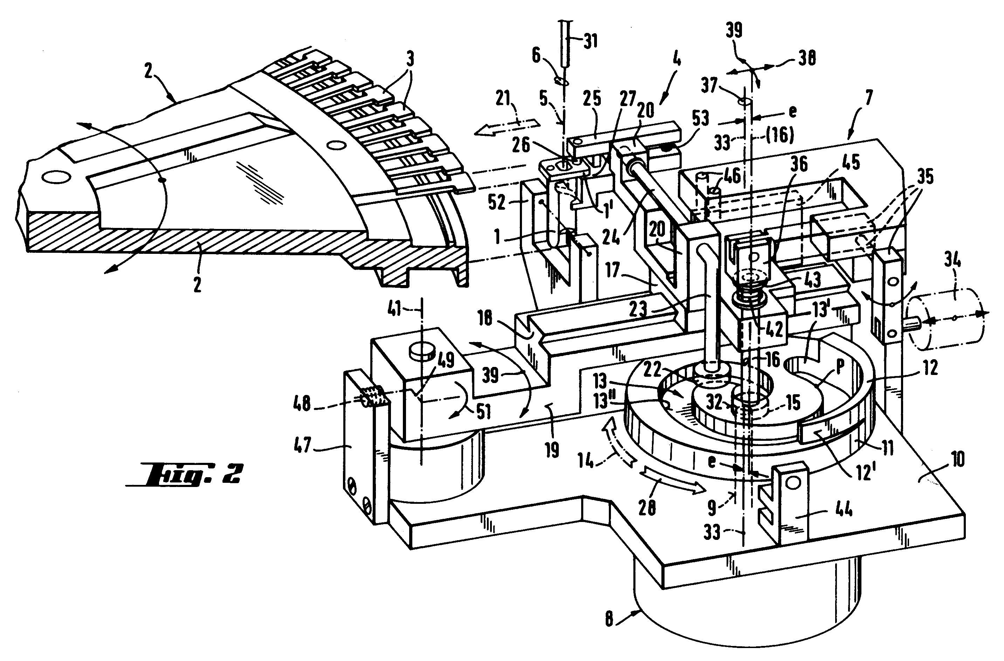

Ein in Fig. 1 und 2 gezeigter, kreisförmiger, durch einen (nicht gezeigten) Antrieb um genaue Winkelschritte in beiden Drehrichtungen drehbarer Rotor 2 dient als Transportmagazin für Küvetten 1. Die Küvetten 1 werden am äusseren Rand des Rotors gehalten, indem sie einerseits mit einem an ihrer Oberseite vorhandenen Flansch 1' auf einer ebenen, zur Rotorachse senkrechten Ringfläche aufliegen und gleichzeitig mit einer ihrer Wandflächen an der im wesentlichen zylindrischen Aussenfläche des Rotors anliegen, sowie andererseits durch jeder Küvettenposition zugeordnete, radial über die Küvette ragende federnde Zungen 3 gehalten werden, die zu diesem Zweck auf ihrer Unterseite einen in eine im Küvettenflansch 1' angeordnete Vertiefung eingreifenden Vorsprung (nicht gezeigt) aufweisen. Durch die federnde Halterung werden die Küvetten so fest gehalten, dass sie auch bei Rotordrehung nicht von selbst herausfallen können. Andererseits erlaubt es die federnde Halterung, die Küvetten manuell oder durch einen mechanischen Greifmechanismus einfach abzunehmen oder aufzustecken.

Eine detaillierte Beschreibung des Rotors und seiner Funktion ist aus EP-A-564 905 mit dem Titel "Transporteinrichtung für eine Analysenvorrichtung" ersichtlich. Auf diese Beschreibung wird hiermit Bezug genommen.

Eine Bearbeitunsstation W ist in einer genau definierten Position relativ zum Rotor 2 angeordnet. Die Bearbeitungsstation im vorliegenden Ausführungsbeispiel dient der Zugabe von Reagenzien zu den in den Küvetten befindlichen Proben und dem Mischen der Reagenzien mit den Proben. Die Bearbeitungsstation enthält im wesentlichen eine Umsetz- und Positioniereinrichtung 4 zum Verbringen der Küvetten vom Rotor in eine Pipettier- und Mischposition und zurück zum Rotor, sowie eine Mischvorrichtung 7.

Andere, nach dem gleichen Prinzip angeordnete und ausgestattete Bearbeitungsstationen dienen beispielsweise der Probeneingabe in die Küvetten.

Die Mischvorrichtung 7 dient dazu, die von der Umsetz- und Positioniereinrichtung 4 in die Pipettier- und Mischposition gebrachte Messküvette einer Bewegung gemäss einer Mischkurve 6 zu unterwerfen. Zu diesem Zweck ist die Umsetz- und Positioniereinrichtung 4 so ausgebildet, dass ihren die Küvette haltenden Teilen eine im wesentlichen elliptische Bewegung entsprechend der Mischkurve 6 aufgezwungen wird. Dies wird in der folgenden Beschreibung näher erläutert.

Unterhalb einer ortsfesten Grundplatte 10 ist ein Servomotor 8 angeordnet, der alle Abläufe steuert. Der Servomotor 8 trägt auf seiner durch die Grundplatte 10 führenden Welle 9 eine Steuerscheibe 11, die mit einem Steuernocken 12 und einer Steuernut 13 versehen ist. Die Steuernut 13 hat eine im wesentlichen spiralige Form und erstreckt sich über einen Winkel von ca. 360° vom Zentrum der Steuerscheibe bis nahe an ihre Peripherie. In der Steuernut ist eine Kurvenrolle 15 positioniert, die an einem Stössel 16 drehbar gelagert ist. Der Stössel 16 ist seinerseits drehfest mit einem Schlitten 17 verbunden, der auf einer Führung 18 in einer im wesentlichen zum Rotor 2 radialen Richtung linear gleitet. Die Führung 18 ist Teil eines Schwenkarms 19. Die Bewegungsrichtung des Schlittens 17 ist durch die Pfeile 21 für die Bewegung zum Rotor hin und 29 für die Bewegung vom Rotor weg angegeben.

Eine weitere Kurvenrolle 22 ist an einem Kurbelarm 23 drehbar gelagert und so positioniert, dass sie während einer bestimmten Winkeldrehung der Steuerscheibe 11 an der Aussenfläche des Steuernockens 12 entlang geführt wird. Der Kurbelarm 23 ist einstückig verbunden mit einer Welle 24 , die in zwei vom Schlitten 17 senkrecht aufragenden Streben 20 drehbar gelagert ist. Die Welle 24 trägt an ihrem anderen Ende einen hebelähnlichen Greifer 25. Eine Auslenkung der Kurvenrolle 22 und des Kurbelarmes 23 durch den Steuernocken 12 führt zur Drehung der Welle 24 und zum Anheben bzw. Senken des Greifers 25.

Der Greifer 25 trägt an seiner Unterseite einen Nocken 26, der so bemessen ist, dass er in die Vertiefung des Küvettenflansches eingreifen kann.

Am anderen Ende des Greifers ist unter ihm eine gegen ein Widerlager gespannte Spiralfeder 53 angeordnet, die dafür sorgt, dass der Greifer sich immer in einer "geschlossenen" Ruhelage befindet, wenn er nicht aktiv geöffnet wird.

Unterhalb des Greifers 25 ist ein Amboss 27 angeordnet, der auf seiner dem Roter 2 und den Küvetten 1 zugewandten Seite eine der Küvettenform entsprechend profilierte Stirnseite besitzt und dessen obere Fläche genau mit der Höhe der ringförmigen Auflagefläche der Küvettenflansche am Rotor übereinstimmt. Der Amboss 27 dient als Gegenstück zum Greifer 25. Zwischen diesen beiden Teilen wird eine Küvette gehalten, um sie vom Roter abzunehmen und in die Pipettier- und Mischposition 5 zu verbringen. In dieser Position 5 befindet sich die Küvette dort, wo eine Pipettenspritze 31 (Fig. 2) in die Ausstossposition im Inneren der Küvette abgesenkt wird.

Die Steuerscheibe weist neben der bereits erwähnten Spiralnut 13 eine zentrale, am inneren Ende der Nut 13 exzentrisch zur Welle 9 angeordnete Bohrung 32 auf, die gegenüber der Spiralnut vertieft ist.

Am Schlitten ist ein Elektromagnet 34 angebracht, der über ein Gestänge 35 einen Hammer 36 in eine obere und eine untere Position betätigt. In seiner unteren Position drückt der Hammer 36 gegen den Druck einer zwischen dem Lager und dem Kopf 43 des Stössels 16 angeordneten Schraubenfeder 42 den Stössel 16 und damit die Kurvenrolle 15 in die zentrale Vertiefung der Steuernut. In seiner oberen Position gibt der Hammer 36 den Kopf 43 des Stössels 16 frei.

An der Peripherie der Steuerscheibe 11 ist ein Drehgeber 44 angeordnet, der auf einen Teil der Scheibe, z.B. einen an ihr angebrachten Flügel 40 anspricht und der der Initialisierung der Steuerscheibe 11 dient.

Der Schwenkarm 19 ist um eine fest mit der Grundplatte 10 verbundene Schwenkachse 41 drehbar gelagert. Seitlich gegen die Schwenkachse 41 versetzt ist eine Schraubenfeder 48 zwischen Schwenkarm 19 und einer Konsole 47 angeordnet. Durch die seitliche Versetzung übt die Feder ein Drehmoment auf den Schwenkarm 19 aus, das letzterem eine definierte Ruhelage aufzwingt. Diese Ruhelage ist so definiert, dass in ihr die Bewegung der Umsetz- und Positioniereinrichtung genau radial zum Rotor erfolgt. Des weiteren begünstigt dies die Einführung der Kurvenrolle 15 in die Steuerkurve 13 nach dem Ausheben aus der Bohrung 32 beim Drehrichtungswechsel von Gegenuhrzeigersinn 28 in die Uhrzeigerrichtung 14.

Der Schlitten 17 weist eine zusätzliche Führung in Form einer vertikalen Führungsplatte 45 und zwei Führungszapfen 46 auf.

In einer relativ sowohl zum Schlitten 17 als auch zum Schwenkarm 19 fixen Position ist eine Lichtschranke angeordnet, die das Vorhandensein oder Fehlen einer Küvette feststellt. Falls keine Küvette gegriffen werden konnte, wird dieser Fehler dem System gemeldet. Darauf erfolgt eine entsprechende Fehlerbehandlung des Systems.

Die Funktion und das Zusammenwirken der beschriebenen Elemente ist wie folgt:
Während des Stillstandes des Rotors 2 entnimmt die Umsetz- und Positioniereinrichtung 4 dem Rotor 2 eine Messküvette 1 (Fig. 1) um sie in eine Pipettierposition 5 zu bringen (Fig. 2).

Es folgt die Pipettierung durch Pipettiernadeln 31 mit gleichzeitiger Vermischung durch in sich geschlossene Schüttelbewegungen in Form einer Mischkurve 6, welche durch die Mischvorrichtung 7, wie weiter unten beschrieben, erzeugt wird. Während des Mischvorganges bleibt die Pipettiernadel in der Küvette eingetaucht und gibt die zu pipettierenden Reagenzien ab. Die Durchmischung ist besonders effizient, wenn während der Mischung pipettiert wird.

Im Anschluss daran wird die mit der Mischung gefüllte Messküvette 1 durch die Umsetz- und Positioniereinrichtung 4 auf das Rotormagazin 2 zurückgebracht, welches die Messküvette 1 zu weiteren Arbeitsstationen weitertransportiert.

Der Antrieb der Umsetz- und Positioniereinrichtung 4 und der Mischvorrichtung 7 erfolgt über den gemeinsamen Motor 8. Die Entnahme der Messküvetten 1 vom Roter 2 erfolgt dabei folgendermassen:
Der Motor 8 treibt über die Welle 9 die Steuerscheibe 11 mit der Steuernocke 12 und der spiraligen Steuernut 13 an.

Durch Drehung der Steuerscheibe 11 im Gegenuhrzeigersinn 28 wird über ein gerades, radial nach aussen wirkendes Kurvenstück 13' der Steuernut 13 die Kurvenrolle 15, der Stössel 16 und der Schlitten 17 samt der Umsetz- und Positioniereinrichtung 4 auf der Führung 18 des Schwenkarmes 19 in Richtung 21 auf den Rotor 2 zubewegt (Fig. 1).

Gleichzeitig wirkt die Steuernocke 12 auf die Kurvenrolle 22 über den Kurbelarm 23 und die Welle 24 öffnend auf den Greifer 25 der Umsetz- und Positionseinrichtung 4. Nach Erreichen der vordersten Stellung der Umsetz- und Positionseinrichtung 4 ermöglicht der Steuernockenteil 12' das Schliessen des Greifers 25 unter der Wirkung der Feder 53. Die Messküvette 1 wird durch die Nocke 26 und den Amboss 27 an ihrem Flansch 1' ergriffen.

Anschliessend (Punkt P der Steuerkurve 13, 13') wird der Schlitten 17 samt Umsetz- und Positioniereinrichung 4 durch den Stössel 16, die Kurvenrolle 15 und die spiralige Nut 13 vom Rotormagazin 2 in Richtung 29 wegbewegt und bringt damit die Messküvette 1 aus dem Wirkbereich des Rotors 2 und die Küvette 1 als solche in ihre Pipettier- und Mischposition 5 (Fig. 2).

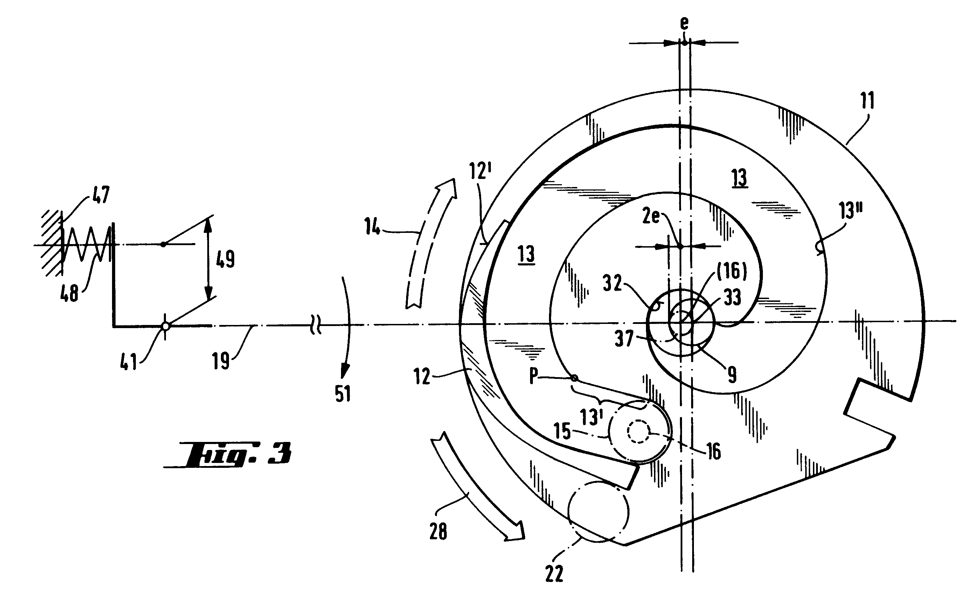

In dieser Position 5 kann nun die Pipettierung durch Pipette(n) 31 bei gleichzeitigem oder anschliessendem Mischen durch Schütteln erfolgen. Der Mischantrieb erfolgt dabei folgendermassen:
In der Pipettier- und Mischposition 5 nach Fig. 2 befindet sich die Kurvenrolle 15 am inneren Ende der Steuernut 13 zunächst genau über der Bohrung 32, welche exzentrisch (e) zum Zentrum 33 der Welle 9 angeordnet ist. Dabei wird über den Elektromagneten 34, das Gestänge 35, den Hammer 36 und den Stössel 16 die Kurvenrolle 15 unter das Niveau der Steuerkurve 13 in die exzentrische Bohrung 32 eingeführt. Durch die weitere Rotation 28 der in der Steuerscheibe 11 angeordneten und zur Welle 9 exzentrischen (e) Bohrung 32 erfolgt eine kreiskörmige, exzentrische Mitnahme 37 mit dem Durchmesser 2e (Fig. 3) der Kurvenrolle 32 samt Stössel 16, wodurch zwei sich überlagernde Schüttel-Mischbewegungsabläufe erzeugt werden, nämlich zum einen eine lineare, oszillierende Misch-Bewegungsrichtung 38 längs der Führung 18 und zum anderen eine oszillierende Schwenkbewegung 39 um die Schwenkachse 41 des Schwenkarmes 19. Beide Bewegungsabläufe 38 und 39 überlagern sich an der Pipettier- und Mischposition 5 zu einer elliptischen Mischkurve 6.

Während des Mischens befindet sich die Kurvenrolle 22 ausserhalb des Wirkungsbereiches der Steuernocke 12 derart, dass sie von letzterer radial nach innen beabstandet oberhalb der Scheibe 11 positioniert ist (Fig. 2).

Ferner ist der Stössel 16 durch die Feder 42 derart belastet, dass er beim Mischen stets vertikal mit seinem Kopf 43 am Hammer 36 anliegt, sich aber unter diesem in den Bewegungsrichtungen 38 und 39 horizontal frei bewegen kann (Fig. 2).

Nach erfolgtem Pipettieren und Mischen erfolgt die Rückführung der gefüllten Messküvette 1 auf den Rotor 2 wie folgt (Fig. 1):
Durch Abheben des Hammers 36 nach Betätigung des Elektromagneten 34, des Gestänges 35 und durch die Feder 42 wird der Stössel 16 samt Kurvenrolle 15 vertikal nach oben aus der Bohrung 32 in das Niveau der Steuerkurve 13 gehoben. Es erfolgt die Drehrichtungsänderung in den Uhrzeigersinn 14. Die Kurvenrolle 15 wird von der Steuernut 13 ergriffen und führt über den Stössel 16 den Schlitten 17 samt Umsetz- und Pipettiereinrichtung 4 längs der Führung 18 in Richtung 21 auf den Rotor 2 zu.

Dabei wird die Messküvette 1 an den Rotor 2 übergeben, wobei inzwischen die Kurvenrolle 22 auf den Steuernockenteil 12' aufgelaufen ist und den Greifer 25 über die Kurbel 23 und die Welle 24 öffnet.

Die Umsetz- und Positionseinrichtung 4 wird danach, bedingt durch das gerade Kurvenstück 13' wieder ein Stück vom Rotor 2 wegbewegt und kommt dabei aus dessen Wirkungsbereich.

Im Anschluss daran verfährt der Rotor in die nächste Position, um die Küvette beispielsweise einer anderen Station zuzuführen und eine neue Küvette 1 der Pipettier- und Mischposition zuzuordnen. Der Arbeitsablauf beginnt wieder wie oben beschrieben.

## Patentansprüche

1. Bearbeitungsstation zur Behandlung von Probenküvetten (1) in einer Analysenvorrichtung mit einer Entnahmevorrichtung zur Entfernung einzelner Küvetten (1) von einem Küvettentransportrotor (2), zur Verbringung der Küvetten in eine Bearbeitungsposition in der Station und zum Zurücksetzen der Küvetten nach einer Behandlung auf den Rotor (2), gekennzeichnet durch eine Pipettiereinrichtung (31) zur Pipettierung von Proben und/oder Reagenzien in eine in der Bearbeitungsposition befindlichen Küvette und eine Mischeinrichtung (7) zur gleichzeitigen Bewegung der Küvetten während der Pipettierung gemäss einer Mischkurve (6) zur Durchmischung des pipettierten Küvetteninhalts.

2. Bearbeitungsstation nach Anspruch 1, dadurch gekennzeichnet, dass die Entnahmevorrichtung eine Umsetz- und Positioniereinrichtung (4) enthält und dass eine Steuereinrichtung zum Steuern sowohl der Bewegungen der Umsetz- und Positioniereinrichtung; als auch eines Mischvorganges während der Bearbeitung vorgesehen ist.

3. Bearbeitungsstation nach Anspruch 2, dadurch gekennzeichnet, dass die Steuereinrichtung eine Steuerscheibe (11) mit einer spiraligen Steuernut (13) zum Bewirken einer linearen Bewegung der Umsetz- und Positioniereinrichtung (4) und einer exzentrischen Bohrung (32) zur Erzeugung der Mischbewegung.

## Claims

1. A processing station for handling sample cuvettes (1) in an analytical device having a withdrawal device for removing individual cuvettes (1) from a cuvette transport rotor (2), for transferring the cuvettes to a position for processing in the station and for returning the cuvettes to the rotor (2) after treatment, charcterized by a pipetting device (31) for pipetting samples and/or reagents into a cuvette situated in the position for processing and a mixing device (7) for the simultaneous movement of the cuvettes during the pipetting according to a mixing curve (6) for mixing the pipetted content of the cuvette.

2. A processing station according to claim 1, characterized in that the withdrawal device contains a change-over and positioning device (4) and that a control device is provided to control not only the movements of the change-over and positioning device, but also a mixing process during processing.

3. A processing station according to claim 2, characterized in that the control device [comprises] a control disc (11) having a spiral-like control groove (13) to bring about a linear movement of the change-over and positioning device (4) and an eccentric bore (32) to produce the mixing motion.

## Revendications

1. Station de traitement pour traiter des éprouvettes à échantillons (1) dans un appareil d'analyse, comportant un appareil de transfert pour enlever des éprouvettes individuelles (1) d'un rotor (2) de transport d'éprouvettes, pour amener les éprouvettes dans une position de traitement dans la station et pour remettre en place les éprouvettes dans le rotor après traitement, caractérisée par un dispositif de pipettage (31) pour pipetter des échantillons et/ou des réactifs dans une éprouvette située dans la position de traitement et un dispositif mélangeur (7) pour déplacer simultanément les éprouvettes pendant le pipettage en correspondance avec une courbe de mélange (6) en vue d'un mélange intime du contenu pipetté des éprouvettes.

2. Station de traitement selon la revendication 1, caractérisée en ce que l'appareil de transfert comprend un dispositif de retournement et positionnement (4) et en ce qu'un dispositif de commande est prévu pour commander aussi bien les mouvements du dispositif de retournement et positionnement qu'également une opération de mélange pendant le traitement.

3. Station de traitement selon la revendication 2, caractérisée en ce que le dispositif de commande comporte un disque de commande (11) pourvu d'une rainure de commande (13) en spirale pour produire un mouvement linéaire du dispositif de retournement et positionnement (4), ainsi qu'un trou excentrique (32) pour produire le mouvement de mélange.
